# EUROPÄISCHE PATENTSCHRIFT

(11) **EP 4 112 237 B1**
(45) Veröffentlichungstag und Bekanntmachung des Hinweises auf die Patenterteilung: **12.11.2025**
(21) Anmeldenummer: 22180303.4
(22) Anmeldetag: 22.06.2022
(51) Int. Cl.: B25J 9/08, B25J 15/00, B25J 15/04, B25J 15/08, B25J 15/06

(54) **GREIFVORRICHTUNG FÜR EINEN ROBOTER UND GREIFSYSTEM**
GRIPPING DEVICE FOR A ROBOT AND GRIPPING SYSTEM
DISPOSITIF DE PRÉHENSION POUR UN ROBOT ET SYSTÈME DE PRÉHENSION

(30) Priorität: 23.06.2021 DE 102021116276
(43) Veröffentlichungstag der Anmeldung: 04.01.2023
(73) Patentinhaber: Deutsches Zentrum für Luft- und Raumfahrt e.V., 53227 Bonn (DE)
(72) Erfinder: Friedl, Werner, 82234 Weßling (DE); Roa-Garzon, Maximo, 82234 Weßling (DE)
(74) Vertreter: Ege Lee & Roider Patentanwälte

(56) Entgegenhaltungen:
- WO-A1-2020/072815
- WO-A1-2022/139305
- DE-A1- 102017 012 302
- DE-A1- 102018 112 633
- DE-B4- 102014 223 118
- JP-A- 2008 178 939
- US-A- 4 699 414
- US-A1- 2017 066 142

## Beschreibung

Die Erfindung betrifft eine Greifvorrichtung für einen Roboter, die Greifvorrichtung aufweisend eine Greiferbasis, eine Greifvorrichtungslängsachse, wenigstens einen aktuierten Greiffinger mit wenigstens einem Fingerglied und wenigstens ein Fingergelenk und wenigstens eine zwischen der Greiferbasis und dem wenigstens einen Greiffinger angeordnete Zwischenbasis.

Aus dem Dokument ist US 2016/0089793 A1 ist ein Greifer bekannt mit einer Basis; zwei oder mehr Fingern, die an der Basis befestigt sind; und einer oder mehreren Öffnungen, die an der Basis oder an mindestens einem der zwei oder mehr Finger angeordnet sind, um eine Absaugung durch ein Vakuum zu ermöglichen.

Aus dem Dokument DE 10 2016 220 643 A1 ist ein Robotergreifer bekannt mit einem Greifergrundkörper, wenigstens einem am Greifergrundkörper gelagertes Saugelement, wenigstens einer am Greifergrundkörper verstellbar gelagerten ersten Greiferbacke, wenigstens einer am Greifergrundkörper verstellbar gelagerten zweiten Greiferbacke, wenigstens einem ersten Hilfssaugelement und wenigstens einem zweiten Hilfssaugelement. Der Greifergrundkörper umfasst eine Anschlusseinrichtung zum Befestigen des Robotergreifers an einem Flansch eines Roboterarms. Das Saugelement umfasst eine an eine Saugleitung anzuschließende Ansaugöffnung und einen die Ansaugöffnung umgebenden Dichtlippenabschnitt. Die erste Greiferbacke und die zweite Greiferbacke weisen jeweils eine Greifkontaktfläche auf, wobei die Greifkontaktflächen ausgebildet sind, zum mechanisch klemmenden Greifen eines durch den Robotergreifer zu handhabenden Gegenstandes, der durch ein Verstellen wenigstens einer der Greiferbacken an den Greifkontaktflächen festzuklemmen ist. Das wenigstens eine erste Hilfssaugelement ist an der ersten Greiferbacke angeordnet. Das wenigstens ein zweites Hilfssaugelement ist an der zweiten Greiferbacke angeordnet.

Aus dem Dokument DE 10 2017 004 096 A1 ist eine Umsetzvorrichtung mit einer verstellbaren Greifvorrichtung bekannt. Die Greifvorrichtung weist zumindest einen ersten Sauger auf, der mit einem Unterdruck beaufschlagbar und mit der Oberfläche eines aufzunehmenden Objektes an einer ersten Sauger-Anlagefläche in Anlage bringbar ist, wobei der erste Sauger eine senkrecht zur ersten Sauger-Anlagefläche verlaufende erste Sauger-Normale definiert. Ein erster Arm ist vorgesehen, der in einem ersten Drehlager um eine Drehachse schwenkbar gelagert ist und einen ersten Armsauger trägt, wobei die Drehachse senkrecht zur ersten Sauger-Normalen verläuft und wobei der erste Armsauger eine erste Armsauger-Anlagefläche aufweist und eine senkrecht zur ersten Armsauger-Anlagefläche verlaufende erste Armsauger-Normale definiert, die parallel zur Drehachse verläuft. Ein zweiter Arm ist vorgesehen, der im Abstand zum ersten Arm angeordnet und in einem zweiten Drehlager um die Drehachse oder eine dazu parallele Achse schwenkbar gelagert ist und einen zweiten Armsauger trägt, wobei der zweite Armsauger eine zweite Armsauger-Anlagefläche aufweist und eine senkrecht zur zweiten Armsauger-Anlagefläche verlaufende zweite Armsauger-Normale definiert, die parallel zur Drehachse und parallel zur ersten Armsauger-Normalen verläuft, wobei der erste Armsauger und der zweite Armsauger einander zugewandt sind.

Aus dem Dokument US 2014/0007730 A1 ist eine Roboterfingeranordnung bekannt, umfassend: eine Basis zur Befestigung des Fingers an einer Roboterhand, wobei die Basis einen Motor aufweist; mindestens zwei Glieder, wobei die Glieder miteinander und mit der Basis durch ein Gelenk verbunden sind; und eine Gelenkwelle und eine Schwenkwelle, die die Gelenke umfassen, wobei sich die Schwenkwelle innerhalb ihrer jeweiligen Gelenkwelle frei bewegt und mit einem vorhergehenden Glied verbunden ist, wobei der Motor zum Öffnen oder Schließen des Fingers aktiviert wird.

Aus dem Dokument DE 10 2017 012 302 A1 ist eine modularer Endeffektor bekannt mit einer Basis mit mindestens einem Anschlusselement, wobei mit dem Anschlusselement insbesondere austauschbar ein Manipulator verbunden ist, bei dem die Position des Anschlusselements und/oder die Position des Manipulators innerhalb des Anschlusselements veränderbar ist, sodass der Manipulator in unterschiedlichen Positionen relativ zur Basis verwendet werden kann.

Aus dem Dokument JP 2008 178939 A ist eine Roboterhand bekannt mit einer Vielzahl von Fingerteilen, die jeweils ein oder mehrere Fingergelenke aufweisen, die sich frei um eine Drehachse bewegen können, und einem Handflächenteil, um die Fingerteile zu tragen, wobei die Drehachsen der Fingergelenke parallel zueinander an den Fingerteilen angeordnet sind, das Handflächenteil mindestens zwei plattenförmigen Handflächenplattenteile aufweist, wobei die Handflächenplattenteile miteinander frei drehbar über Handflächengelenke verbunden sind, die Drehachsen aufweisen, die parallel zu den Drehachsen der Fingergelenke an ihren einen Endteilen angeordnet sind, und mit den Fingerteilen über die Fingergelenke an ihren anderen Endteilen verbunden sind.

Das Dokument US 4 699 414 A betrifft eine Roboter-Greifvorrichtung zum Halten und Greifen einer Vielzahl von elektronischen Bauteilen. Die Roboter-Greifvorrichtung umfasst einen Führungsrahmen, einen Antriebsmotor und Greifblöcke mit Fingern. Die Finger haben Zacken an den Fingerspitzen. Die Fingerspitzen nehmen an Nuten axiale Bauteile in Form von Widerständen und radiale Bauteile in Form von Kondensatoren auf. Zylindrische, dosenförmige Bauteile werden durch eine leichte Abschrägung an den Fingerspitzenabschnitten sowie durch ein Zurücksetzen eines Abschnitts an einem Zapfen aufgenommen. Die Finger lassen sich mit Hilfe eines Motors kontrolliert in verschiedene zentrierte Positionen bewegen. Wenn die Finger zusammengebracht werden, greifen sie ineinander.

Das Dokument US 217/066142 A1 betrifft einen Greiffinger zum Greifen von Gegenständen, der eine Greiferbacke und eine Greiferspitze, die sich mit einer Greiferachse entlang einer Längsrichtung erstreckt, umfasst. Die Greiferspitze ist über ein Verbindungselement lösbar mit der Greiferbacke verbunden. Das Verbindungselement ist mit einer sich in Längsrichtung erstreckenden Verbindungsbuchse in Form einer Steckverbindung derart verriegelbar, dass im verriegelten Zustand ein Wegkippen der Greiferspitze in Bezug auf die Greiferachse ausgeschlossen ist und gleichzeitig die Greiferspitze durch eine vorgebbare Längssperrkraft in Bezug auf die Längsrichtung gegen die Greiferbacke verriegelt ist.

Der Erfindung liegt die Aufgabe zugrunde, eine eingangs genannte Greifvorrichtung strukturell und/oder funktionell zu verbessern. Außerdem liegt der Erfindung die Aufgabe zugrunde, ein eingangs genanntes Greifsystem bereitzustellen und/oder strukturell und/oder funktionell zu verbessern.

Die Aufgabe wird gelöst mit einer Greifvorrichtung mit den Merkmalen des Anspruchs 1. Vorteilhafte Ausführungen und/oder Weiterbildungen sind Gegenstand der abhängigen Ansprüche.

Die Greifvorrichtung kann zur Anordnung an einem Roboter ausgelegt sein. Die Greifvorrichtung kann als Endeffektor eines Roboters ausgelegt sein. Die Greifvorrichtung kann zum Aufnehmen, Halten, Umorientieren und/oder Ablegen von Objekten ausgelegt sein. Die Greifvorrichtung weist eine Greifvorrichtungsachse auf. Die Greifvorrichtungsachse ist eine Längsachse der Greifvorrichtung. Der Roboter kann ein Erkundungsroboter, Industrieroboter, Medizinroboter, Personal Robot, Serviceroboter, Transportroboter, Logistikroboter, autonomer Roboter und/oder mobiler Roboter sein. Die Greiferbasis kann zum Verbinden der Greifvorrichtung mit einem Roboter ausgelegt sein. Die Greiferbasis kann eine Faltenbalg aufweisen. Die Greiferbasis kann wenigstens eine mechanische Schnittstelle, wenigstens eine Leistungsschnittstelle und/oder wenigstens eine Signalschnittstelle aufweisen. Die Greifvorrichtung kann mehrere Greiffinger, insbesondere wenigstens zwei Greiffinger, aufweisen. Die Greiffinger können konzentrisch zur Greifvorrichtungsachse angeordnet sein. Die Greiffinger können einander gegenüberliegend angeordnet sein. Die Greiffinger können gleichmäßig verteilt um die Greifvorrichtungsachse angeordnet sein. "Aktuiert" bedeutet vorliegend insbesondere, dass der wenigstens eine Greiffinger mithilfe wenigstens eines Aktuators bewegbar ist. Der wenigstens eine Aktuator kann als Stellglied für einen Regelkreis ausgelegt sein. Der wenigstens eine Aktuator kann dazu ausgelegt sein, bei einem Regelungsvorgang Signale in Bewegungen umzusetzen, mit denen eine Regelgröße beeinflusst wird. Der wenigstens eine Greiffinger kann mehrere Fingerglieder, mehrere Fingergelenke und/oder eine Fingerbasis aufweisen. Der wenigstens eine Greiffinger kann ein basisseitiges proximales Ende und ein distales Ende aufweisen. Die Fingerbasis kann das proximale Ende des wenigstens einen Greiffingers bilden. Ein Fingerglied oder ein Fingergelenk kann das distale Ende des wenigstens einen Greiffingers bilden. Ein das distale Ende des wenigstens einen Greiffingers bildendes Fingerglied oder Fingergelenk kann auch als Fingerendglied oder Fingerendgelenk bezeichnet werden. Die übrigen Fingerglieder oder Fingergelenke können auch als Fingerzwischenglieder oder Fingerzwischengelenke bezeichnet werden. Das wenigstens eine Fingergelenk kann einen Freiheitsgrad f=1, f=2 oder f=3 aufweisen. Das wenigstens eine Fingergelenk kann als Drehgelenk, Kreuzgelenk oder Kugelgelenk ausgeführt sein. Die wenigstens eine Zwischenbasis kann zum Verbinden des wenigstens einen Greiffingers und der Greiferbasis miteinander ausgelegt sein. Die wenigstens eine Zwischenbasis kann aktuiert sein. Die wenigstens eine Zwischenbasis kann wenigstens eine mechanische Schnittstelle, wenigstens eine Leistungsschnittstelle und/oder wenigstens eine Signalschnittstelle aufweisen. Die wenigstens eine mechanische Schnittstelle, die wenigstens eine Leistungsschnittstelle und/oder die wenigstens eine Signalschnittstelle kann dem wenigstens einen Greiffinger zugeordnet sein. Die wenigstens eine mechanische Schnittstelle, die wenigstens eine Leistungsschnittstelle und/oder die wenigstens eine Signalschnittstelle kann der Greiferbasis zugeordnet sein.

Die wenigstens eine Zwischenbasis kann relativ zu der Greiferbasis verschwenkbar und/oder verlagerbar sein. Die wenigstens eine Zwischenbasis kann um eine Schwenkachse verschwenkbar sein. Die Schwenkachse ist windschief zu der Greifvorrichtungsachse angeordnet. Die Schwenkachse ist nicht-parallel zu der Greifvorrichtungsachse angeordnet. Die Schwenkachse oder deren Verlängerung kann die Greifvorrichtungsachse oder deren Verlängerung schneiden. Die wenigstens eine Zwischenbasis kann entlang einer vorgegebenen Bewegungskurve verlagerbar sein. Die Bewegungskurve kann einen inkonstanten Radius, eine inkonstante Krümmung und/oder eine wechselnde Krümmung aufweisen. Die Bewegungskurve und die Greifvorrichtungsachse können in einer gemeinsamen Ebene liegen. Ein Abstand der wenigstens einen Zwischenbasis zu der Greiferbasis kann veränderbar sein. Ein Abstand der Schwenkachse von der Greifvorrichtungsachse kann veränderbar sein. Eine Lage der Schwenkachse zu der Greifvorrichtungsachse kann veränderbar sein. Zwischen der wenigstens einen Zwischenbasis und der Greiferbasis kann ein Drehgelenk wirksam sein. Zwischen der wenigstens einen Zwischenbasis und der Greiferbasis kann ein Koppelgetriebe, beispielsweise ein viergelenkiges Koppelgetriebe, wirksam sein. Die wenigstens eine Zwischenbasis kann zwischen zwei Endlagen verschwenkbar oder verlagerbar sein. Eine Stellung in den Endlagen kann selbsthaltend sein. Der wenigstens eine Greiffinger kann eine Greiffingerachse aufweisen. Die Greiffingerachse kann eine Längsachse des wenigstens einen Greiffingers sein. Der wenigstens eine Greiffinger kann relativ zu der wenigstens einen Zwischenbasis bewegbar sein. Der wenigstens eine Greiffinger kann relativ zu der Greiferbasis drehbar sein. Der wenigstens eine Greiffinger kann um die Greiffingerachse drehbar sein. Der wenigstens eine Greiffinger kann mit seinem proximalen Ende drehbar an der wenigstens einen Zwischenbasis angeordnet sein.

Die Greifvorrichtung kann eine Fingeraktuatorik für den wenigstens einen Greiffinger aufweisen. Die Fingeraktuatorik kann wenigstens einen Aktuator zum Bewegen und/oder Drehen des wenigstens einen Greiffingers, insbesondere des wenigsten einen Fingerglieds, des wenigstens einen Fingergelenks und/oder der wenigstens einen Fingerbasis, aufweisen. Die Fingeraktuatorik kann mehrere Aktuatoren aufweisen. Der wenigstens eine Greiffinger kann vollaktuiert sein. Der wenigstens eine Aktuator kann einen Elektromotor, ein Getriebe und/oder eine elektronische Kontrolleinrichtung aufweisen. Die Kontrolleinrichtung kann zum steuerungstechnischen und/oder regelungstechnischen Kontrollieren des Elektromotors ausgelegt sein. Die Fingeraktuatorik kann an der wenigstens einen Zwischenbasis angeordnet sein. Die Greifvorrichtung kann eine Basisaktuatorik für die wenigstens eine Zwischenbasis aufweist. Die Basisaktuatorik kann wenigstens einen Aktuator zum Bewegen der wenigstens einen Zwischenbasis aufweisen. Die Basisaktuatorik kann mehrere Aktuatoren aufweisen. Die wenigstens eine Zwischenbasis kann vollaktuiert sein. Der wenigstens eine Aktuator kann einen Elektromotor, ein Getriebe und/oder eine elektronische Kontrolleinrichtung aufweisen. Die Kontrolleinrichtung kann zum steuerungstechnischen und/oder regelungstechnischen Kontrollieren des Elektromotors ausgelegt sein. Die Basisaktuatorik kann an der Greiferbasis angeordnet sein.

Der wenigstens eine Greiffinger kann wenigstens ein wechselbares erstes Fingergreifmodul aufweisen. Das wenigstens eine erstes Fingergreifmodul kann mehrteilig ausgeführt sein. Das wenigstens eine erstes Fingergreifmodul kann mehrere Greifmodulteile aufweisen. Die Greifmodulteile können unterschiedliche Greifwirkungen aufweisen. Wenigstens ein Greifmodulteil kann anfügbar und/oder entfernbar sein. Das wenigstens eine erste Fingergreifmodul kann an einem Fingerendglied oder Fingerendgelenk angeordnet sein. Ein Fingerendglied oder Fingerendgelenk kann eine mechanische Schnittstelle, eine Leistungsschnittstelle und/oder eine Signalschnittstelle für das wenigstens eine Fingergreifmodul aufweisen. Ein Fingerendglied oder Fingerendgelenk einerseits und das wenigstens eine Fingergreifmodul, insbesondere der Verbindungsabschnitt, können korrespondierende Schnittstellen aufweisen. Das wenigstens ein erste Fingergreifmodul kann mithilfe einer lösbaren Verbindung an einem Fingerendglied oder Fingerendgelenk angeordnet sein. Das wenigstens ein erste Fingergreifmodul auf ein Fingerendglied oder Fingerendgelenk aufsteckbar sein. Der wenigstens eine Greiffinger kann wenigstens ein weiteres Fingergreifmodul aufweisen. Das wenigstens eine weitere Fingergreifmodul kann an einem Fingerzwischenglied oder Fingerzwischengelenk angeordnet sein. Das wenigstens eine weitere Fingergreifmodul kann fest oder lösbar an dem wenigstens einen Greiffinger angeordnet sein. Die Greiferbasis kann wenigstens ein Basisgreifmodul aufweisen. Das wenigstens eine Basisgreifmodul kann an der Greiferbasis angeordnet sein. Das wenigstens eine Basisgreifmodul kann fest oder lösbar an der Greiferbasis angeordnet sein. Das wenigstens eine erste Fingergreifmodul, das wenigstens eine weitere Fingergreifmodul und/oder das wenigstens eine Basisgreifmodul können/kann pneumatisch, mechanisch und/oder magnetisch wirksam sein.

Die Greifvorrichtung kann wenigstens ein Federmodul aufweisen. Das wenigstens eine Federmodul kann dazu ausgelegt sein, im Falle einer Kollision der Greifvorrichtung mechanische Energie aufzunehmen. Das wenigstens eine Federmodul kann dazu ausgelegt sein, eine passive Flexibilität der Greiferbasis in Bezug auf einen Roboter zu ermöglichen. Das wenigstens eine Federmodul kann dazu ausgelegt sein, eine passive Flexibilität in wenigstens einem Gelenk zu ermöglichen. Das wenigstens eine Federmodul kann der Greiferbasis, der wenigstens einen Zwischenbasis und/oder dem wenigstens einen Greiffinger zugeordnet sein. Das wenigstens eine Federmodul kann eine einstellbare Steifigkeit aufweisen. Das wenigstens eine Federmodul kann eine variable Steifigkeit aufweisen. Das wenigstens eine Federmodul kann in einen Aktuator integriert sein. Wenigstens ein Aktuator kann ein integriertes Federmodul aufweisen. Ein Aktuator mit einem Federmodul mit variabler Steifigkeit kann auch als variabler Steifigkeitsaktuator bezeichnet werden.

Die Greifvorrichtung kann wenigstens ein Sensormodul aufweisen. Das wenigstens eine Sensormodul kann dazu ausgelegt sein, Kräfte, Momente, Positionen, Geschwindigkeiten, Beschleunigungen, Drücke und/oder Volumenströme zu erfassen. Das wenigstens eine Sensormodul kann zur mechanischen, thermoelektrischen, resistiven, piezoelektrischen, kapazitiven, induktiven, optischen, akustischen und/oder magnetischen Erfassung ausgelegt sein. Das wenigstens eine Sensormodul kann dazu ausgelegt sein, Messgrößen an dem wenigstens einen ersten Fingergreifmodul, an dem wenigstens einen weiteren Fingergreifmodul, an dem wenigstens einen Basisgreifmodul, an dem wenigstens einen Greiffinger, an der wenigstens einen Zwischenbasis, an der Greiferbasis und/oder an einem aufzunehmenden, zu haltenden, umzuorientierenden und/oder abzulegenden Objekt aufzunehmen. Das wenigstens eine Sensormodul kann einen Kraftsensor, einen Drucksensor und/oder eine Kamera aufweisen. Das wenigstens eine Sensormodul kann einen Drei-Achsen-Magnetsensor aufweisen.

Das Fingergreifmodul kann als wenigstens eines erstes Fingergreifmodul ausgelegt sein. Das Fingergreifmodul kann zur Anordnung an einem Fingerendglied oder Fingerendgelenk ausgelegt sein. Der Verbindungsabschnitt kann zum Verbinden des Fingergreifmoduls mit einem Fingerendglied oder Fingerendgelenk ausgelegt sein. Der Verbindungsabschnitt kann zur lösbaren Verbindung mit einem Fingerendglied oder Fingerendgelenk ausgelegt sein. Das Fingergreifmodul kann als wenigstens eines weiteres Fingergreifmodul ausgelegt sein. Das Fingergreifmodul kann zur Anordnung an einem Fingerzwischenglied oder Fingerzwischengelenk ausgelegt sein. Der Verbindungsabschnitt kann zum Verbinden des Fingergreifmoduls mit einem Fingerzwischenglied oder Fingerzwischengelenk ausgelegt sein. Der Verbindungsabschnitt kann zur festen oder lösbaren Verbindung mit einem Fingerzwischenglied oder Fingerzwischengelenk ausgelegt sein.

Das wenigstens eine Basisgreifmodul kann einen Verbindungsabschnitt und einen Wirkabschnitt aufweisen. Das wenigstens eine Basisgreifmodul kann zur Anordnung an dem Basismodul ausgelegt sein. Der Verbindungsabschnitt kann zum Verbinden des wenigstens eine Basisgreifmoduls mit dem Basismodul ausgelegt sein. Der Verbindungsabschnitt kann zur festen oder lösbaren Verbindung mit dem Basismodul ausgelegt sein.

Der Verbindungsabschnitt kann zur kraftschlüssigen, formschlüssigen und/oder stoffschlüssigen Verbindung ausgelegt sein. Der Verbindungsabschnitt kann einen Steckverbinder aufweisen. Der Verbindungsabschnitt kann einen Steckverbinder aufweisen. Der Verbindungsabschnitt kann eine Klebefläche aufweisen. Der Verbindungsabschnitt kann ein Gewinde aufweisen. Der Verbindungsabschnitt kann eine mechanische Schnittstelle aufweisen. Der Verbindungsabschnitt weist eine Leistungsschnittstelle und/oder eine Signalschnittstelle auf. Der Wirkabschnitt kann dazu ausgelegt sein, mit einem aufzunehmenden, zu haltenden, umzuorientierenden und/oder abzulegenden Objekt eine Wirkpaarung zu bilden. Die Wirkpaarung kann kraftschlüssig, formschlüssig und/oder stoffschlüssig sein. Der Wirkabschnitt kann ein Saugelement, ein Elastikelement, ein Polsterelement, ein Reibelement und/oder ein Magnetelement aufweisen. Das Saugelement kann saugnapfartig ausgeführt sein und/oder einen Anschluss zur Beaufschlagung mit Unterdruck aufweisen. Das Elastikelement kann zumindest abschnittsweise aus einem Elastomer, beispielsweise aus einem Silikonkautschuk oder Silikonelastomer, hergestellt sein. Das Elastikelement kann zumindest abschnittsweise massiv oder zellig ausgeführt sein. Das Elastikelement kann eine Wandung und einen Hohlraum aufweisen. Der Hohlraum kann evakuierbar und/oder belüftbar oder befüllbar sein. Das Elastikelement kann einen Anschluss zur Beaufschlagung mit Unterdruck, zum Entlüften und/oder zum Beaufschlagen mit Überdruck aufweisen. Das Elastikelement kann ballonartig ausgeführt und/oder aufblasbar sein. Das Reibelement kann eine reibungserhöhende Oberfläche aufweisen. Das Magnetelement kann einen Permanentmagnet und/oder einen Elektromagnet aufweisen.

Die Greifvorrichtung kann eine Kontrolleinrichtung aufweisen. Die Kontrolleinrichtung kann zum steuerungstechnischen und/oder regelungstechnischen Kontrollieren der Basisaktuatorik, der Fingeraktuatorik, des wenigstens einen ersten Fingergreifmoduls, des wenigstens einen weiteren Fingergreifmoduls und/oder des wenigstens einen Basisgreifmoduls ausgelegt sein. Die Kontrolleinrichtung kann elektronische Komponenten und/oder pneumatische Komponenten aufweisen. Die Kontrolleinrichtung kann wenigstens ein Wegeventil, insbesondere ein 3/2-Wegeventil, aufweisen. Die Kontrolleinrichtung kann in die Greifvorrichtung, insbesondere in die Greiferbasis und/oder in die Zwischenbasis, integriert sein. Die Kontrolleinrichtung kann strukturell in/an der Greifvorrichtung, insbesondere in/an der Greiferbasis und/oder in/an der Zwischenbasis, aufgenommen sein. Die Kontrolleinrichtung kann strukturell mit der Greifvorrichtung, insbesondere mit der Greiferbasis und/oder mit der Zwischenbasis, zusammengefasst sein.

Die Greifvorrichtung kann eine Vakuumpumpe zum Erzeugen von Unterdruck und/oder einen Verdichter zum Erzeugen von Überdruck aufweisen. Die Vakuumpumpe und/oder der Verdichter kann einen Elektromotor aufweisen. Die Vakuumpumpe und/oder der Verdichter können/kann in die Greifvorrichtung, insbesondere in die Greiferbasis und/oder in die Zwischenbasis, integriert sein. Die Vakuumpumpe und/oder der Verdichter können/kann strukturell in/an der Greifvorrichtung, insbesondere in/an der Greiferbasis und/oder in/an der Zwischenbasis, aufgenommen sein. Die Vakuumpumpe und/oder der Verdichter können/kann strukturell mit der Greifvorrichtung, insbesondere mit der Greiferbasis und/oder mit der Zwischenbasis, zusammengefasst sein.

Die Fingergreifmodule des Fingergreifmodulsatzes können jeweils unterschiedliche Wirkabschnitte aufweisen. Die Fingergreifmodule des Fingergreifmodulsatzes können bedarfsweise verwendbar sein. Die Fingergreifmodule des Fingergreifmodulsatzes können manuell und/oder automatisiert wechselbar sein.

Zusammenfassend und mit anderen Worten dargestellt ergibt sich somit durch die Erfindung unter anderem ein Hybridgreifer für flexibles Greifen und neu Methoden der Inhand Manipulation. Es können mindesten zwei Fingermodule vorhanden sein, die zwei oder mehrere Freiheitsgrade haben. Die Fingermodule können jeweils eine Basis aufweisen. Die Basen der Fingermodule können verdrehbar bzw. nach außen verschiebbar sein, um einen Arbeitsraum des Greifers zu erhöhen. Der Greifer kann zusätzlich eine integrierte Vakuumpumpe und Schaltventile aufweisen, die das nötige Vakuum in Saugglocken steuern können. Die Fingerspitzen können einfach austauschbar und dazu aufschiebbar sein. Ein Schlauch kann die Basis eines Endglieds des Fingers mit den Ventilen der Vakuumpumpe verbinden. Ein Gewinde in der Basis des Fingerendglied kann ein einfaches Anschrauben eine Saugglocke ermöglichen. Dadurch kann eine Anpassung an zu greifende Objekte vorgenommen werden. Durch Steuerung einzelner Saugglocken kann ein Drehen von Objekten ermöglicht sein, auch nur mit zwei Fingern. Eine Saugposition kann verkleinert oder vergrößert werden, um sich an ein Objekt angepasst zu können bzw. kann ein Objekt zwischen den Fingern verdreht werden, beispielsweise um es schnell in einer neuen Orientierung in ein Regal zu räumen.

Sollen Objekte gegriffen werden, die nicht mit einer Saugglocke greifbar sein, z.B. Zitronen in einem Netz, kann eine Fingerspitze aufgesetzt werden, die innen einen Silikonballon hat, der eine Struktur des Fingers überragt und als Greifpad dienen kann. Um zwischen die Finger zwischen Objekten zu positionieren, kann eine reduzierte Reibung vorteilhaft sein, dafür kann der Ballon evakuierbar sein, sodass die Greiffläche mit der hohen Reibung zurückgezogen ist. Nachdem die Finger positioniert sind, können die Ventile wieder geöffnet werden, sodass die Greifflächen einen sicheren Kontakt zum Objekt herstellen.

Die Erfindung kann sich durch eines oder mehrere der folgende Merkmale auszeichnen: alle vollaktuierten Finger haben an der Fingerspitze mindestens ein Anschluss für eine Saugglocke; der Greifer besitzt mindestens zwei Finger mit mindestens zwei Gelenken; die Fingerbasen können zur Greiferbasis verdreht werden oder nach außen geschoben werden, um z.B. Objekte in einem Regal senkrecht zu Greiferbaisis aufnehmen zu können; bei drehbaren Basen wird ein Viergelenkmechanismus verwendet, der in den Endlagen lastfrei für den Antrieb ist; die Fingerspitzen können einfach aufgesteckt werden; die Finger können bei Bedarf mit reibungserhöhenden Pads ausgestattet werden; bei Bedarf kann zentral zwischen den Fingern eine weitere Saugglocke montiert werden; die Vakuumpumpe und die Schaltventile sind integriert im Greifer; jeder Finger hat ein Schaltventil, um das Vakuum unabhängig ein und aus zu schalten; ein 3/2 Weg Ventil erlaubt es, dass die Pumpe auch Druck erzeugen kann, um die Schläuche von angesaugten Verunreinigungen zu säubern oder Greifkissen aufzublasen; der Strom der Vakuumpumpe kann gemessen werden bzw. das Vakuum; bei Bedarf kann eine Fingerspitze mit Ballon aufgeschoben werden, damit kann die Reibung zum Objekt geändert werden; die Fingerantriebe können als variable Steifigkeitsaktoren ausgeführt sein, um unvorhersehbare Kontakte mit der Umwelt zu kompensieren; bei Bedarf kann eine Fingerspitze mit Permanentmagnet/Elektromagnet aufgeschoben werden, damit können magnetische Objekte gegriffen werden; die Basis des Greifers ist als Balgstruktur ausgeführt mit einem Magnet in der Mitte; mindestens ein Drei-Achsen-Magnet-Sensor misst die Bewegung des Balges, um Kräfte und Momente zu ermitteln; ein Sensor-Kameramodul kann aufgesteckt werden, um taktile Sensoren auf der Fingerspitze auszuwerten bzw. die Objektposition kann mit Hilfe der Kamera bestimmt werden.

Mit der Erfindung werden eine Flexibilität und Variabilität erhöht. Vielfältige und unterschiedliche Greifaufgaben werden ermöglicht. Eine Produktivität wird erhöht. Ein Aufwand, wie Zeitaufwand, Handhabungsaufwand und/oder Kostenaufwand, werden/wird reduziert. Ein Umorientieren bzw. Ändern einer Greifposition ohne Ablegen wird ermöglicht.

Nachfolgend werden Ausführungsbeispiele der Erfindung unter Bezugnahme auf Figuren näher beschrieben, dabei zeigen schematisch und beispielhaft:
- Fig. 1: eine Greifvorrichtung für einen Roboter mit einer Greiferbasis, aktuierten Greiffingern, und aktuierten Zwischenbasen,
- Fig. 2: ein Aufnehmen eines Objekts mithilfe eines Greiffingers mit ausgesteller Zwischenbasis,
- Fig. 3: ein Übergeben eines Objekts zwischen zwei Greiffingern,
- Fig. 4: ein umorientiertes Zurückgeben von einem Greiffinger an einen andere Greiffinger,
- Fig. 5: ein Sauggreifen eines großen Objekts mit ausgestellten Zwischenbasen und
- Fig. 6: ein Klemmgreifen eines Objekts mit ausgestellten Zwischenbasen.

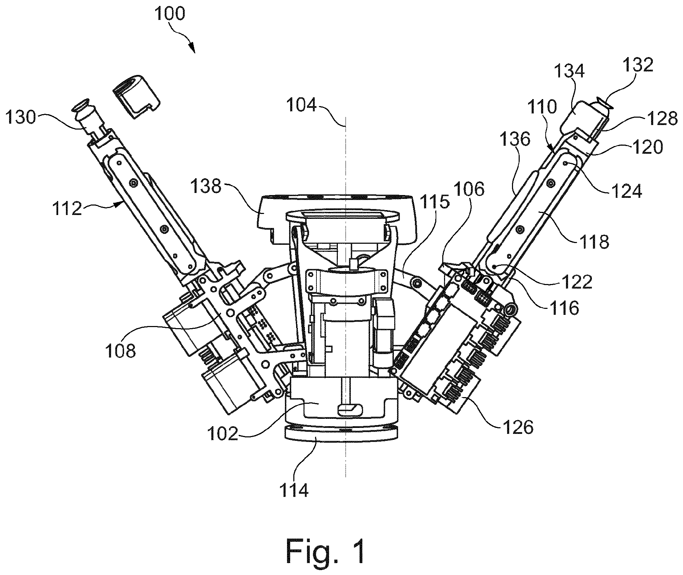

Fig. 1 zeigt eine Greifvorrichtung 100 für einen Roboter. Die Greifvorrichtung 100 dient als Endeffektor eines Roboters zum Aufnehmen, Halten, Umorientieren und/oder Ablegen von Objekten. Beispielsweise kann die Greifvorrichtung 100 zum Bestücken von Warenpräsentationssystemen, wie Regalen, mit Waren, die unterschiedlichste Formen, Konfektionierungen, Gebinde, Verpackungen etc. aufweisen können, dienen.

Die Greifvorrichtung 100 weist eine Greiferbasis 102 mit einer Greifvorrichtungsachse 104, zwei Zwischenbasen 106, 108 und zwei Greiffinger 110, 112 auf. An der Greiferbasis 102 ist ein Anschlussflansch 114 zum Verbinden der Greifvorrichtung 100 weist mit einem Roboter angeordnet. Die Zwischenbasen 106, 108 und die Greiffinger 110, 112 sind im Wesentlichen strukturell und/oder funktional gleichartig ausgeführt, nachfolgend werden daher nur eine Zwischenbasis 106 und ein Greiffinger 110 beschrieben.

Die Zwischenbasis 106 ist an der Greiferbasis 102 angeordnet und relativ zu der Greiferbasis 102 verschwenkbar. Dazu sind zwischen der Zwischenbasis 106 und der Greiferbasis 102 ein Drehgelenk und Schwenkhebel 115 wirksam. Der Greiffinger 110 weist eine Fingerbasis 116, ein Fingerzwischenglied 118, ein Fingerendglied 120 und Fingergelenke 122, 124 auf. Die Fingergelenke 122, 124 sind jeweils als Drehgelenk ausgeführt. Der Greiffinger 110 ist sind an den Fingergelenken 122, 124 bewegbar und mit der Fingerbasis 116 um eine Greiffingerachse drehbar an der Zwischenbasis 106 angeordnet. Zum Verschwenken der Zwischenbasis 106 weist die Greifvorrichtung 100 eine in die Greiferbasis 102 integrierte Basisaktuatorik auf. Zum Bewegen und Drehen des Greiffingers 110 weist die Greifvorrichtung 100 eine an der Zwischenbasis 106 angeordnete Fingeraktuatorik 126 auf.

Die Greiffinger 110, 112 weisen jeweils ein erstes Fingergreifmodul 128, 130 auf. Die dargestellten Fingergreifmodule 128, 130 sind im Wesentlichen strukturell und/oder funktional gleichartig ausgeführt, nachfolgend werden daher nur ein Fingergreifmodul 128 beschrieben. Das Fingergreifmodul 128 ist wechselbar an dem Fingerendglied 120 angeordnet und weist ein mit Unterdruck beaufschlagbares elastisches, napfförmiges Saugelement 132 für ein unterdruckbasiertes Greifen von Objekten auf. Zum Erzeugen und Kontrollieren des Unterdrucks sind in die Greiferbasis 102 eine Vakuumpumpe und ein 3/2-Wegeventil integriert. An das Fingergreifmodul 128 kann ein Greifmodulteil 134 mit einer Greiffläche für ein kraftschlüssiges, insbesondere reibschlüssiges, Greifen von Objekten angefügt, vorliegend angeclipst, werden. Das Fingergreifmodul 128 kann bedarfsweise gegen ein anders wirkendes Fingergreifmodul, beispielsweise ein Fingergreifmodul mit einem evakuierbaren und/oder aufblasbaren Elastikelement oder ein Fingergreifmodul mit einem Magnetelement, gewechselt werden. Außerdem weisen die Greiffinger 110, 112 jeweils ein weiteres Fingergreifmodul, wie 136, auf, das an dem Fingerzwischenglied 118 angeordnet ist und zum kraftschlüssigen, insbesondere reibschlüssigen, Greifen von Objekten dient.

Die Greiferbasis 102 und die Greiffinger 110, 112 sind passiv flexibel und können im Falle einer Kollision der Greifvorrichtung mechanische Energie aufnehmen, wobei eine Flexibilität variabel einstellbar ist. Zwischen der Greiferbasis 102 und dem Anschlussflansch 114 ist ein Drei-Achsen-Magnet-Sensor angeordnet, um Kräfte und/oder Momente zu erfassen. An der Greiferbasis 102 ist ein Sensor-/Kameramodul 136 angeordnet, mit dem an den distalen Enden der Greiffinger 110, 112 angeordnete taktile Sensoren ausgewertet und/oder Objektpositionen bestimmt werden können.

Zum steuerungstechnischen und/oder regelungstechnischen Kontrollieren der Basisaktuatorik, der Fingeraktuatorik 126 und der Fingergreifmodule 128, 130 weist die Greifvorrichtung 100 eine elektronische Kontrollvorrichtung auf. Die Kontrollvorrichtung ist teilweise in der Greiferbasis 102 integriert und teilweise an der Zwischenbasis 106, 108 angeordnet.

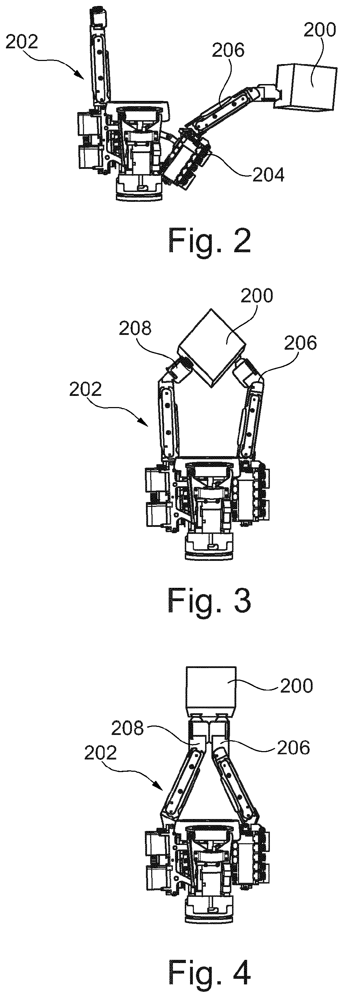

Fig. 2 zeigt ein Aufnehmen eines Objekts 200 mithilfe einer Greifvorrichtung 202, wie Greifvorrichtung 100 gemäß Fig. 1. Dabei ist die Zwischenbasis 204 ausgestellt und das Objekt 200 wird von dem Greiffinger 206 mithilfe des Saugelements gegriffen. Beispielsweise kann auf diese Weise ein Objekt 200 aus einem schmalen Regal entnommen werden. Fig. 3 zeigt ein Übergeben des Objekts 200 dem Greiffinger 206 und dem Greiffinger 208. Fig. 4 zeigt ein umorientiertes Zurückgeben von dem Greiffinger 208 an den Greiffinger 206.

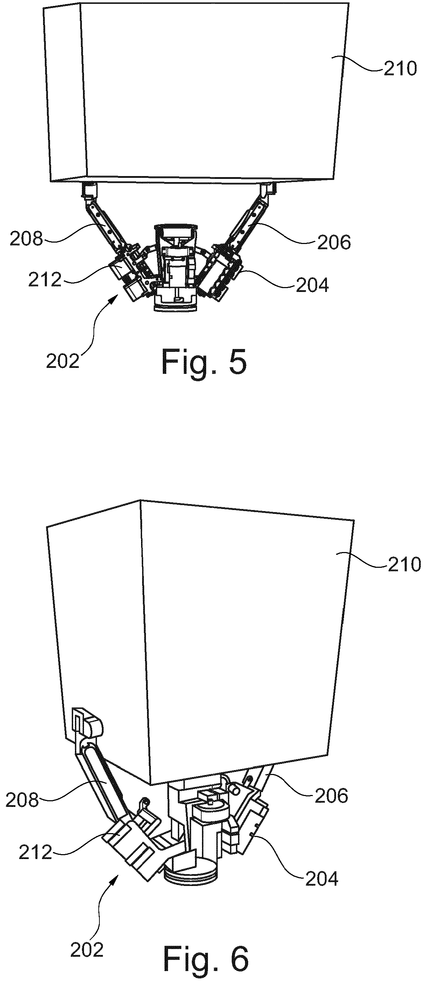

Fig. 5 zeigt ein Sauggreifen eines großen Objekts 210 mithilfe der Greifvorrichtung 202. Dabei sind beide Zwischenbasen 204, 212 ausgestellt und das Objekt 210 wird von den Greiffingern 206, 208 mithilfe der Saugelemente gegriffen. Fig. 6 zeigt ein Klemmgreifen eines Objekts 214. Dabei sind beide Zwischenbasen 204, 212 ausgestellt und das Objekt 214 wird von den Greiffingern 206, 208 mithilfe der Greifmodulteile kraft-/reibschlüssig gegriffen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

### Bezugszeichen

- 100: Greifvorrichtung
- 102: Greiferbasis
- 104: Greifvorrichtungsachse
- 106: Zwischenbasis
- 108: Zwischenbasis
- 110: Greiffinger
- 112: Greiffinger
- 114: Anschlussflansch
- 115: Schwenkhebel
- 116: Fingerbasis
- 118: Fingerzwischenglied
- 120: Fingerendglied
- 122: Fingergelenk
- 124: Fingergelenk
- 126: Fingeraktuatorik
- 128: erstes Fingergreifmodul
- 130: erstes Fingergreifmodul
- 132: Saugelement
- 134: Greifmodulteil
- 136: weiteres Fingergreifmodul
- 138: Sensor-/Kameramodul

- 200: Objekt
- 202: Greifvorrichtung
- 204: Zwischenbasis
- 206: Greiffinger
- 208: Greiffinger
- 210: Objekt
- 212: Zwischenbasis
- 214: Objekt

## Patentansprüche

1. Greifvorrichtung (100, 202) für einen Roboter, die Greifvorrichtung (100, 202) aufweisend eine Greiferbasis (102), eine Greifvorrichtungslängsachse (104), wenigstens einen aktuierten Greiffinger (110, 112, 206, 208) mit wenigstens einem Fingerglied (118, 120) und wenigstens einem Fingergelenk (122, 124) und wenigstens eine zwischen der Greiferbasis (102) und dem wenigstens einen Greiffinger (110, 112, 206, 208) angeordnete Zwischenbasis (106, 108, 204, 212), **dadurch gekennzeichnet, dass** die wenigstens eine Zwischenbasis (106, 108, 204, 212) um eine zu der Greifvorrichtungslängsachse (104) windschiefe Schwenkachse relativ zu der Greiferbasis (102) bewegbar ist.

2. Greifvorrichtung (100, 202) nach Anspruch 1, **dadurch gekennzeichnet, dass** die wenigstens eine Zwischenbasis (106, 108, 204, 212) relativ zu der Greiferbasis (102) verschwenkbar und/oder verlagerbar ist.

3. Greifvorrichtung (100, 202) nach wenigstens einem der vorhergehenden Ansprüche, **dadurch gekennzeichnet, dass** die wenigstens eine Zwischenbasis (106, 108, 204, 212) entlang einer vorgegebenen Bewegungskurve verlagerbar ist.

4. Greifvorrichtung (100, 202) nach wenigstens einem der vorhergehenden Ansprüche, **dadurch gekennzeichnet, dass** die Greifvorrichtung (100, 202) eine an der wenigstens einen Zwischenbasis (106, 108, 204, 212) angeordnete Fingeraktuatorik (126) für den wenigstens einen Greiffinger (110, 112, 206, 208) aufweist.

5. Greifvorrichtung (100, 202) nach wenigstens einem der vorhergehenden Ansprüche, **dadurch gekennzeichnet, dass** die Greifvorrichtung (100, 202) eine an der Greiferbasis (102) angeordnete Basisaktuatorik für die wenigstens eine Zwischenbasis (106, 108, 204, 212) aufweist.

6. Greifvorrichtung (100, 202) nach wenigstens einem der vorhergehenden Ansprüche, **dadurch gekennzeichnet, dass** der wenigstens eine Greiffinger (110, 112, 206, 208) wenigstens ein wechselbares erstes Fingergreifmodul (128, 130) aufweist.

7. Greifvorrichtung (100, 202) nach Anspruch 6, **dadurch gekennzeichnet, dass** das wechselbare Fingergreifmodul (128, 130) einen Verbindungsabschnitt zum Verbinden mit einem Greiffinger (110, 112, 206, 208) der Greifvorrichtung (100, 202) und wenigstens einen Wirkabschnitt aufweist, wobei der Verbindungsabschnitt eine Leistungsschnittstelle und/oder eine Signalschnittstelle aufweist, um das Fingergreifmodul (128, 130) mithilfe einer Kontrolleinrichtung steuerungstechnisch und/oder regelungstechnisch zu kontrollieren.

8. Greifvorrichtung (100, 202) nach Anspruch 7, **dadurch gekennzeichnet, dass** der wenigstens eine Wirkabschnitt ein Saugelement (132), ein Elastikelement, ein Reibelement und/oder ein Magnetelement aufweist.

9. Greifvorrichtung (100, 202) nach wenigstens einem der vorhergehenden Ansprüche, **dadurch gekennzeichnet, dass** der wenigstens eine Greiffinger (110, 112, 206, 208) ein erstes Fingergreifmodul (128, 130) und wenigstens ein weiteres Fingergreifmodul (136) aufweist.

10. Greifvorrichtung (100, 202) nach wenigstens einem der vorhergehenden Ansprüche, **dadurch gekennzeichnet, dass** die Greiferbasis (102) wenigstens ein Basisgreifmodul aufweist.

11. Greifvorrichtung (100, 202) nach wenigstens einem der Ansprüche 6 bis 10, **dadurch gekennzeichnet, dass** das wenigstens eine erste Fingergreifmodul (128, 130), das wenigstens eine weitere Fingergreifmodul (136) und/oder das wenigstens eine Basisgreifmodul pneumatisch, mechanisch und/oder magnetisch wirksam sind/ist.

12. Greifvorrichtung (100, 202) nach wenigstens einem der vorhergehenden Ansprüche, **dadurch gekennzeichnet, dass** die Greifvorrichtung (100, 202) wenigstens ein Federmodul aufweist.

13. Greifvorrichtung (100, 202) nach wenigstens einem der vorhergehenden Ansprüche, **dadurch gekennzeichnet, dass** die Greifvorrichtung (100, 202) wenigstens ein Sensormodul (138) aufweist.

14. Greifvorrichtung (100, 202) nach wenigstens einem der vorhergehenden Ansprüche, **dadurch gekennzeichnet, dass** die Greifvorrichtung (100, 202) eine integrierte Kontrolleinrichtung, eine integrierte Vakuumpumpe und/oder einen integrierten Verdichter aufweist.

15. Greifsystem, **dadurch gekennzeichnet, dass** das Greifsystem eine Greifvorrichtung (100, 202) nach wenigstens einem der Ansprüche 1 bis 14 und einen Fingergreifmodulsatz mit wechselbaren Fingergreifmodulen (128, 130, 136) aufweist, wobei die Fingergreifmodule (128, 130, 136) jeweils einen Verbindungsabschnitt zum Verbinden mit einem Greiffinger (110, 112, 206, 208) der Greifvorrichtung (100, 202) und wenigstens einen Wirkabschnitt aufweisen und der Verbindungsabschnitt eine Leistungsschnittstelle und/oder eine Signalschnittstelle aufweist, um das Fingergreifmodul (128, 130, 136) mithilfe einer Kontrolleinrichtung steuerungstechnisch und/oder regelungstechnisch zu kontrollieren.

## Claims

1. Gripping device (100, 202) for a robot, the gripping device (100, 202) comprising a gripper base (102), a gripping device longitudinal axis (104), at least one actuated gripping finger (110, 112, 206, 208) with at least one finger member (118, 120) and at least one finger joint (122, 124), and at least one intermediate base (106, 108, 204,212) arranged between the gripper base (102) and the at least one gripping finger (110, 112, 206, 208), **characterized in that** the at least one intermediate base (106, 108, 204, 212) is movable relative to the gripper base (102) about a pivot axis that is skewed to the gripper device longitudinal axis (104).

2. Gripping device (100, 202) according to claim 1, **characterized in that** the at least one intermediate base (106, 108, 204, 212) can be pivoted and/or displaced relative to the gripper base (102).

3. Gripping device (100, 202) according to at least one of the preceding claims, **characterized in that** the at least one intermediate base (106, 108, 204, 212) can be displaced along a predetermined movement curve.

4. Gripping device (100, 202) according to at least one of the preceding claims, **characterized in that** the gripping device (100, 202) has a finger actuator (126) for the at least one gripping finger (110, 112, 206, 208) arranged on the at least one intermediate base (106, 108, 204, 212).

5. Gripping device (100, 202) according to at least one of the preceding claims, **characterized in that** the gripping device (100, 202) has a base actuator arranged on the gripper base (102) for the at least one intermediate base (106, 108, 204, 212).

6. Gripping device (100, 202) according to at least one of the preceding claims, **characterized in that** the at least one gripping finger (110, 112, 206, 208) has at least one interchangeable first finger gripping module (128, 130).

7. Gripping device (100, 202) according to claim 6, **characterized in that** the interchangeable finger gripping module (128, 130) has a connecting section for connecting to a gripping finger (110, 112, 206, 208) of the gripping device (100, 202) and at least one functional section, wherein the connecting section has a power interface and/or a signal interface for controlling the finger gripping module (128, 130) by means of a control device for control and/or regulation purposes.

8. Gripping device (100, 202) according to claim 7, **characterized in that** the at least one functional section comprises a suction element (132), an elastic element, a friction element, and/or a magnetic element.

9. Gripping device (100, 202) according to at least one of the preceding claims, **characterized in that** the at least one gripping finger (110, 112, 206, 208) has a first finger gripping module (128, 130) and at least one further finger gripping module (136).

10. Gripping device (100, 202) according to at least one of the preceding claims, **characterized in that** the gripper base (102) has at least one base gripping module.

11. Gripping device (100, 202) according to at least one of claims 6 to 10, **characterized in that** the at least one first finger gripping module (128, 130), the at least one further finger gripping module (136) and/or the at least one base gripping module are pneumatically, mechanically, and/or magnetically effective.

12. Gripping device (100, 202) according to at least one of the preceding claims, **characterized in that** the gripping device (100, 202) has at least one spring module.

13. Gripping device (100, 202) according to at least one of the preceding claims, **characterized in that** the gripping device (100, 202) has at least one sensor module (138).

14. Gripping device (100, 202) according to at least one of the preceding claims, **characterized in that** the gripping device (100, 202) has an integrated control device, an integrated vacuum pump, and/or an integrated compressor.

15. Gripping system, **characterized in that** the gripping system has a gripping device (100, 202) according to at least one of claims 1 to 14 and a finger gripping module set with interchangeable finger gripping modules (128, 130, 136), wherein the finger gripping modules (128, 130, 136) each have a connecting section for connecting to a gripping finger (110, 112, 206, 208) of the gripping device (100, 202) and at least one functional section, and the connecting section has a power interface and/or a signal interface for controlling the finger gripping module (128, 130, 136) by means of a control device for control and/or regulation purposes.

## Revendications

1. Dispositif de préhension (100, 202) pour un robot, le dispositif de préhension (100, 202) comprenant une base de préhension (102), un axe longitudinal du dispsotof de préhension (104), au moins un doigt de préhension actionné (110, 112, 206, 208) avec au moins un membre de doigt (118, 120) et au moins une articulation de doigt (122, 124), et au moins une base intermédiaire (106, 108, 206, 208) disposée entre la base de préhension (102) et le au moins un doigt de préhension (110, 112, 206, 208), **caractérisé en ce que** la au moins une base intermédiaire (106, 108, 204, 212) est mobile autour d'un axe de pivotement incliné par rapport à l'axe longitudinal du dispositif de préhension (104) par rapport à la base de préhension (102).

2. Dispositif de préhension (100, 202) selon la revendication 1, **caractérisé en ce que** la au moins une base intermédiaire (106, 108, 204, 212) peut pivoter et/ou se déplacer par rapport à la base de préhension (102).

3. Dispositif de préhension (100, 202) selon au moins l'une des revendications précédentes, **caractérisé en ce que** la au moins une base intermédiaire (106, 108, 204, 212) est déplaçable le long d'une courbe de mouvement prédéfinie.

4. Dispositif de préhension (100, 202) selon au moins l'une des revendications précédentes, **caractérisé en ce que** le dispositif de préhension (100, 202) comprend un actionneur à doigts (126) disposé sur au moins une base intermédiaire (106, 108, 204, 212) pour au moins un doigt de préhension (110, 112, 206, 208).

5. Dispositif de préhension (100, 202) selon au moins l'une des revendications précédentes, **caractérisé en ce que** le dispositif de préhension (100, 202) comporte un actionneur de base disposé sur la base de préhension (102) pour au moins une base intermédiaire (106, 108, 204, 212).

6. Dispositif de préhension (100, 202) selon au moins l'une des revendications précédentes, **caractérisé en ce que** le au moins un doigt de préhension (110, 112, 206, 208) comporte au moins un premier module de préhension à doigt interchangeable (128, 130).

7. Dispositif de préhension (100, 202) selon la revendication 6, **caractérisé en ce que** le module de préhension à doigts interchangeables (128, 130) comporte une partie de connexion pour la connexion à un doigt de préhension (110, 112, 206, 208) du dispositif de préhension (100, 202) et au moins une partie active, la partie de connexion comportant une interface de puissance et/ou une interface de signal pour contrôler le module de préhension à doigts (128, 130) à l'aide d'un dispositif de côntrole en terms de technique de commande et/ou de régulation.

8. Dispositif de préhension (100, 202) selon la revendication 7, **caractérisé en ce que** la au moins une partie active comprend un élément d'aspiration (132), un élément élastique, un élément de friction et/ou un élément magnétique.

9. Dispositif de préhension (100, 202) selon au moins l'une des revendications précédentes, **caractérisé en ce que** le au moins un doigt de préhension (110, 112, 206, 208) comporte un premier module de préhension à doigts (128, 130) et au moins un autre module de préhension à doigts (136).

10. Dispositif de préhension (100, 202) selon au moins l'une des revendications précédentes, **caractérisé en ce que** la base de préhension (102) comporte au moins un module de préhension de base.

11. Dispositif de préhension (100, 202) selon au moins l'une des revendications 6 à 10, **caractérisé en ce que** le au moins un premier module de préhension à doigts (128, 130), le au moins un autre module de préhension à doigts (136) et/ou le au moins un module de préhension de base sont/est à action pneumatique, mécanique et/ou magnétique.

12. Dispositif de préhension (100, 202) selon au moins l'une des revendications précédentes, **caractérisé en ce que** le dispositif de préhension (100, 202) comporte au moins un module à ressort.

13. Dispositif de préhension (100, 202) selon au moins l'une des revendications précédentes, **caractérisé en ce que** le dispositif de préhension (100, 202) comporte au moins un module capteur (138).

14. Dispositif de préhension (100, 202) selon au moins l'une des revendications précédentes, **caractérisé en ce que** le dispositif de préhension (100, 202) comprend un dispositif de commande intégré, une pompe à vide intégrée et/ou un compresseur intégré.

15. Système de préhension, **caractérisé en ce que** le système de préhension comprend un dispositif de préhension (100, 202) selon au moins l'une des revendications 1 à 14 et un jeu de modules de préhension à doigts avec des modules de préhension à doigts interchangeables (128, 130, 136), les modules de préhension à doigts (128, 130, 136) comportant chacun une partie de connexion pour la connexion à un doigt de préhension (110, 112, 206, 208) du dispositif de préhension (100, 202) et au moins une partie active, et la partie de connexion comporte une interface de puissance et/ou une interface de signal pour contrôler le module de préhension à doigts (128, 130, 136) à l'aide d'un dispositif de contrôle en terms de technique de commande et/ou de régulation.
